# EUROPEAN PATENT SPECIFICATION

(11) **EP 1 275 266 B1**
(45) Date of publication and mention of the grant of the patent: **28.07.2004**
(21) Application number: 01945000.6
(22) Date of filing: 11.04.2001
(51) Int. Cl.: H04Q 7/38

(54) **MULTICAST PAGING IN A COMMUNICATIONS SYSTEM**
MEHRADRESSFUNKRUFNACHRICHTEN IN EINEM KOMMUNIKATIONSSYSTEM
RECHERCHE MULTIDESTINATAIRE DE PERSONNE DANS UN SYSTEME DE COMMUNICATION

(30) Priority: 14.04.2000 GB 0009388
(43) Date of publication of application: 15.01.2003
(73) Proprietor: Telefonaktiebolaget LM Ericsson (publ), 164 83 Stockholm (SE)
(72) Inventor: KVARNSTRÖM, Bo, S-583 31 Linköping (SE); OLSSON, John, Gunnar, Mikael, S-582 35 Linköping (SE); ANDERSSON, Anders, Erling, S-583 32 Linköping (SE); SCHULTZ, Per, Johan, S-584 37 Linköping (SE)
(74) Representative: O'Connell, David Christopher
(86) International application number: PCT/EP2001/004184
(87) International publication number: WO 2001/080588

(56) References cited:
- EP-A- 0 544 456
- WO-A-98/56206
- US-A- 6 026 302

## Description

### TECHNICAL FIELD OF THE INVENTION

This invention relates to a mobile communications system, and in particular to the sending of paging messages in such a system.

### BACKGROUND OF THE INVENTION

Conventional mobile telephony systems require the use of paging to find mobile stations within a network area. For example, when an incoming call is to be sent to a mobile station in a cellular network, it is necessary to locate the mobile station, so that a traffic channel can be allocated in the appropriate cell.

Typically, this involves finding the last location of the mobile station which was known to the network, and broadcasting a paging message which the mobile station can detect. The paging message can be broadcast to a single cell, to a location area, which may cover one or more cells, or to a coverage area, which may include one or more location areas.

For example, in the GSM system, paging is defined in section 08.08 of the specification. Similar methods exist in essentially all cellular telephony systems.

It will be appreciated that, since by definition the location of the mobile station is not known when paging occurs, paging messages may need to be transmitted from several base stations in their respective cells. Paging messages are therefore originated at a central point in the network, for example in the mobile services switching centre (MSC). A paging message is then sent from the MSC to the base station controller (BSC), where it is analysed, and then distributed to the respective addressed base stations.

Thus, each page can require the transmission of many messages from the BSC. In the case of a network topology which is based on the internet protocol (IP), all messages which share a common path are competing for the available bandwidth. Thus, at the BSC, for example, the transmission of many paging messages reduces the bandwidth which is available for other types of messages.

WO 98/56206 discloses a method in a cellular radio communications system of minimising the set-up delay for a mobile terminated message, which is divided into one or more data units. The method is carried out by multicasting the message to at least two selected base stations in the vicinity of the mobile station. Thereafter, at least one first data unit of the message is simultaneously transmitted in an initial signal, which is sent out from the base stations and directed to the mobile station.

### SUMMARY OF THE INVENTION

According to a first aspect of the present invention there is provided a method of issuing paging messages over an air interface in a cellular radio communication network comprising network nodes being connected to a plurality of base stations forming a location area, each base station covering a cell providing an air interface for radio communications to mobile stations, which can roam freely between the cells, the method comprising: receiving in a network node a paging request for a mobile station located in any of the cells, the paging request specifying one or more cells in which a page must be issued; generating a multicast paging message being addressed to the base stations in the cells specified in the paging request; transmitting the multicast paging message from the network node to a plurality of base stations located in a predefined area; determining in a base station located in the predefined area, but not being specifically addressed in the multicast paging message, if the paging message is addressed to one of its neighbouring cells or to a cell in a neighbouring location area; and if yes, issuing a paging message over the air interface corresponding to the received multicast paging message, if a paging channel of said base station has capacity therefor.

According to a second aspect of the present invention there is provided a base station for use in a cellular radio communications network comprising network nodes being connected to a plurality of base stations forming a location area, each base station covering a cell providing an air interface for radio communications to mobile stations which can roam freely between the cells, the base station comprising: means for receiving a multicast paging message from a network node, the multicast paging message being addressed to one or more base stations in the network; means for determining, if the multicast paging message is not specifically addressed thereto, whether the paging message is addressed to one of its neighbouring cells, or to a cell in a neighbouring location area; and if yes, being adapted to issue a paging message over the air interface corresponding to the received multicast paging message, if a paging channel of said base station has capacity therefor.

### BRIEF DESCRIPTION OF DRAWINGS

Figure 1 shows a part of a cellular telephone network in accordance with the invention.
Figure 2 is a flow chart showing a first method in accordance with the invention.
Figure 3 is a flow chart showing a second method in accordance with the invention.
Figure 4 is a flow chart showing a third method in accordance with the invention.
Figure 5 is a flow chart showing a fourth method in accordance with the invention.
Figure 6 shows a part of a second cellular telephone network in accordance with the invention.

### DETAILED DESCRIPTION OF PREFERRED EMBODIMENTS

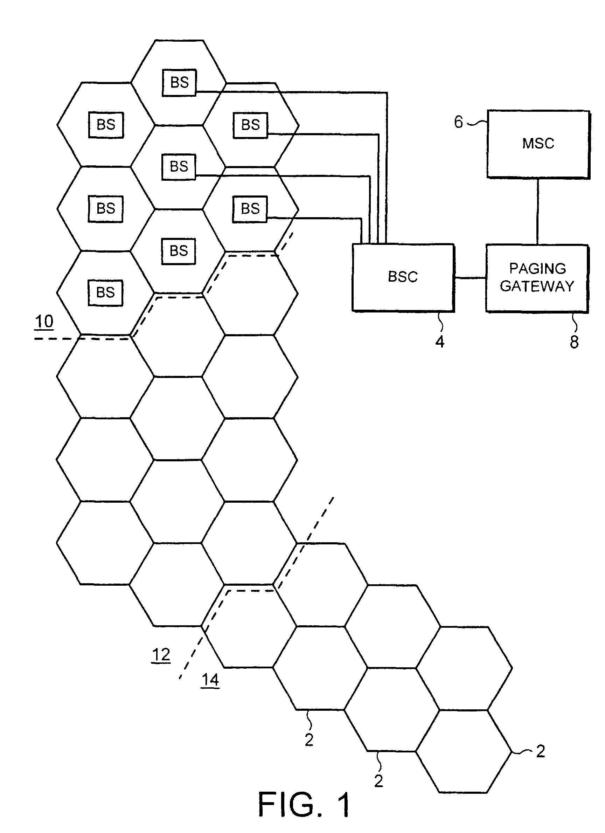

Figure 1 is a schematic diagram of a part of a typical GSM cellular radiotelephone network infrastructure in accordance with the invention.

The illustrated network includes a large number of cells 2, only some of which are shown in Figure 1. Each cell contains a respective base station BS, with an antenna, for communication with mobile stations within the cell. Again, only some of the base stations are shown in Figure 1. Each base station BS has a respective landline connection to a base station controller (BSC) 4.

It will be appreciated that radio telecommunications networks can take many forms, and that the invention is applicable more widely than to the specific form of network illustrated in Figure 1.

A mobile services switching centre (MSC) 6 is connected to the BSC 4, and is in control of the network.

In accordance with the invention, the network also includes a paging gateway 8, which handles the distribution of paging messages, as will be described in more detail below.

The paging gateway 8 is shown as an entirely separate entity located between the BSC 4 and MSC 6, but the functionality of the paging gateway could be included in either the BSC or MSC.

In this preferred embodiment, paging messages are originated in the paging gateway 8, although as mentioned previously, this can form part of the BSC or MSC. Having the paging gateway between the MSC and BSC means that the paging gateway frees the BSC from involvement in paging, and the use of multicast messages means that the resultant number of messages through the BSC is minimised.

For the purposes of paging, the network defines a number of location areas, of which Figure 1 shows parts of three location areas 10, 12, 14, which are shown separated by dashed lines. The operation of the location areas will be described in more detail below.

As is known, when a call to a mobile station is originated, a paging message is sent to that mobile station. Specifically, a message is transmitted over the air interface in some selected number of cells, in which it is thought that the mobile station may be located. The selected cells are preferably chosen with some knowledge of the recent location of the mobile station. If the mobile station detects the paging message, it responds thereto, and the call can be set up.

The invention relies on the use of multicast messaging between the network and the base stations, to reduce the total number of messages being transmitted, for example through the base station controller. A multicast message is a message which is sent over a network to any desired number of receivers in the network. Each receiver can belong to one or more multicast groups, and the membership of the multicast groups can be assigned on configuration of the system, but can be altered dynamically.

In a preferred embodiment of the invention, there is a respective multicast group which corresponds to each of the defined location areas in the network. Thus every cell in a location area is a member of the corresponding multicast group. There is another multicast group which corresponds to each of the base station controllers in the network. Thus every cell is a member of the multicast group corresponding to its base station controller.

When a paging message is to be sent, a determination is made as to the desired extent of the paging message. This will depend on the information available about the location of the mobile station.

As a result of this determination about the desired extent of the paging message, a paging message can be sent from the paging gateway 8 to the base station in a single cell. Alternatively, a single multicast paging message can be sent from the paging gateway to every cell in a location area. Further alternatively, a single multicast paging message can be sent from the paging gateway to every cell covered by a BSC.

Thus, the extent of the paging message can be controlled as desired, although it is necessary that the gateway has knowledge of the addresses of each cell and multicast group.

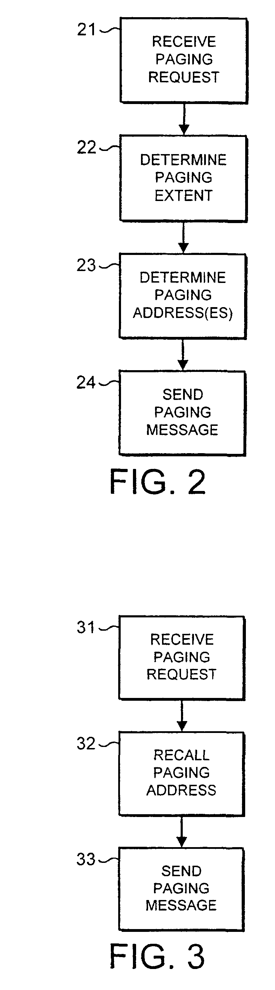

Figure 2 is a flow chart showing the procedure carried out in the paging gateway 8 in implementing this embodiment of the invention.

In step 21, the paging gateway receives a paging request from the MSC. The paging request includes the identity of the subscriber to be paged, an indication of the paging sub-channel which is to be used, and the cells in which the page must be issued. In step 22, the paging gateway determines the required extent of the paging message. As mentioned above, this information is contained in the request from the MSC, although this determination may be made entirely by the paging gateway. In step 23, the paging gateway determines the addresses of the cells and/or groups to which the message is to be sent, and, in step 24, it sends the paging message.

Thus, where a message is to be sent to every cell in a multicast group, only one multicast message needs to be sent.

In an alternative preferred embodiment of the invention, there is defined a single multicast group for paging purposes, and every base station belongs to that multicast group.

Figure 3 shows the simplified procedure carried out by the paging gateway in that case. In step 31, the paging gateway receives a paging request from the MSC. As described above, all paging messages are sent to the single multicast group which includes all base stations, so the paging gateway only needs to know that one address, which it recalls in step 32, and, in step 33, it sends the paging message.

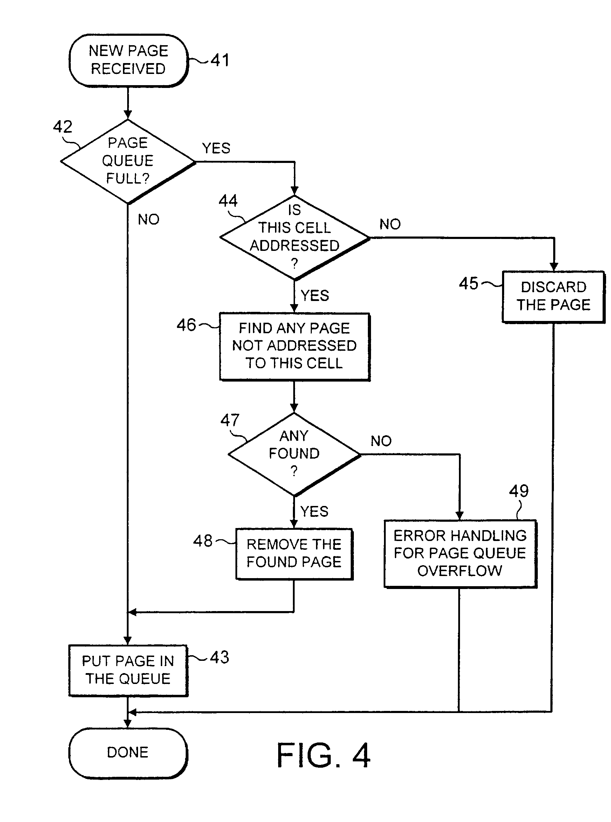

Figure 4 is a flow chart showing the procedure carried out by the base stations when the paging gateway is carrying out the simplified procedure of Figure 3. Although the paging gateway requires less knowledge, as described above, the base stations require more knowledge. Specifically, each base station needs to know which cell, location area and BSC it belongs to, so that it knows which of the received paging messages are addressed to it.

At step 41, the base station receives a new page message, and, at step 42, determines whether its page queue is full. That is, it determines whether it has capacity for a message on its paging channel. If the queue is not full then the message is put in the queue (step 43) in any event, and the procedure ends.

If the page queue is full, the base station determines in step 44 whether it is one of the cells addressed by the page. If the answer is no, the procedure passes to step 45, and the page is discarded. If at step 44 it is determined that the cell is addressed by the page, the procedure passes to step 46. In step 46, the system searches for a page in the queue which was not addressed to the base station, that is, a page inserted into the queue by an iteration of step 43. In step 47 it is tested whether such a page is found and, if so, the procedure passes to step 48, in which that found page is discarded, and then to step 43, in which the newly arrived page is inserted in the queue. If, on the other hand, no such page is found in step 47, that is, the page queue is already full of messages addressed specifically to that base station, an error situation is considered to have occurred, step 49.

Thus, in this case, only one message still passes through the BSC, thereby freeing BSC resources for other purposes. However, the total number of paging messages transmitted over the air interface is maximised, thereby ensuring that the base station paging channels are fully utilised, and increasing the probability that a given page will locate the intended mobile station.

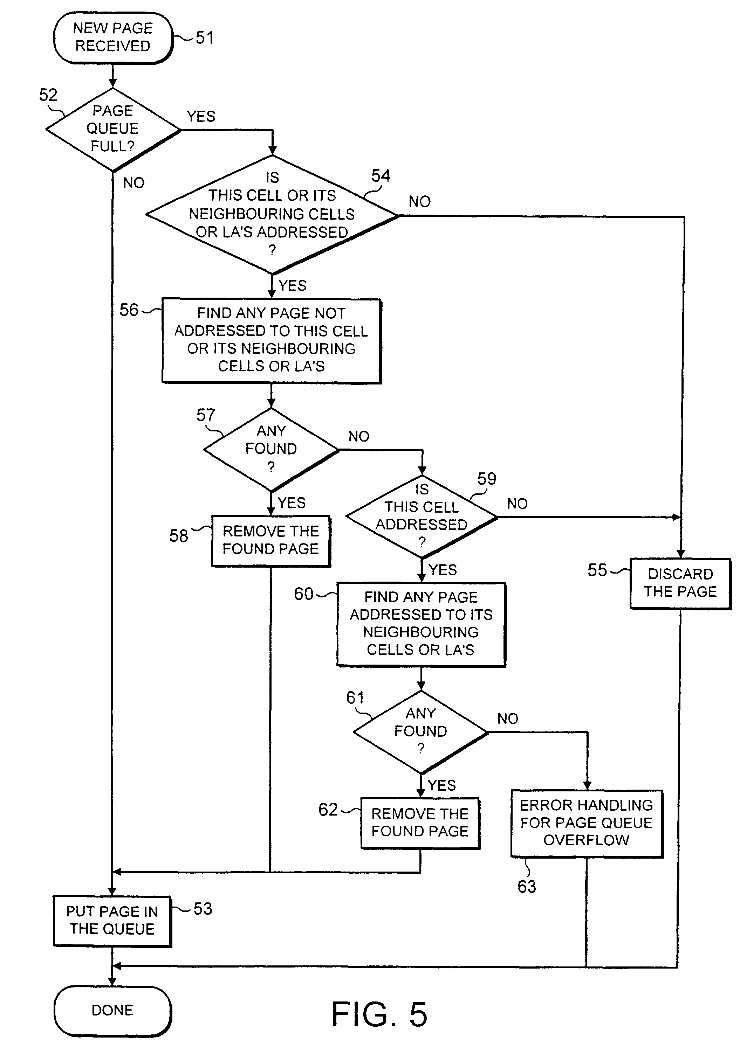

Figure 5 is a flow chart showing an alternative procedure carried out by the base stations when the paging gateway is carrying out the simplified procedure of Figure 3. In this case, the base stations require still more knowledge. Specifically, they need to know the neighbouring cells and neighbouring location areas to the cell and location area it belongs to.

At step 51, the base station receives a new page message, and, at step 52, determines whether its page queue is full. That is, it determines whether it has capacity for a message on its paging channel. If the queue is not full then the message is put in the queue (step 53) in any event, and the procedure ends.

If the page queue is full, the base station determines in step 54 whether it is one of the cells addressed by the page, or whether one of its neighbouring cells is addressed, or whether a cell in a neighbouring location area is addressed. If the answer is no, the procedure passes to step 55, and the page is discarded. If at step 54 it is determined that the cell is addressed by the page, or that one of its neighbouring cells is addressed, or that a cell in a neighbouring location area is addressed, the procedure passes to step 56. In step 56, the system searches for a page in the queue which does not fall into the categories tested in step 54.

In step 57 it is tested whether such a page is found and, if so, the procedure passes to step 58, in which that found page is discarded, and then to step 53, in which the newly arrived page is inserted in the page queue.

If on the other hand step 57 fails to find a page in the queue, the procedure passes to step 59, in which the base station determines whether it is one of the cells addressed by the page. If the answer is no, the procedure passes to step 55, and the page is discarded.

If at step 59 it is determined that the cell is addressed by the page, the procedure passes to step 60, in which it searches in the page queue for a page addressed only to one of its neighbouring cells, or to a cell in a neighbouring location area.

In step 61 it is tested whether such a page is found and, if so, the procedure passes to step 62, in which that found page is discarded, and then to step 53, in which the newly arrived page is inserted in the queue. If, on the other hand, no such page is found in step 61, that is, the page queue is already full of messages addressed specifically to that base station, an error situation is considered to have occurred, step 63.

Thus, in this case, received page messages are prioritised. The highest priority is given to pages specifically addressed to the cell, including those pages which are addressed to all cells in the location area or BSC to which the cell belongs. The next priority is given to messages addressed to neighbouring cells or cells in neighbouring location areas, and the lowest priority to other messages. This further increases the probability that a given page will locate the intended mobile station.

A possible further alternative procedure for the base stations is that each incoming page is first tested to determine whether the page is specifically addressed to the cell, including by way of its location area or BSC. If not, the page is discarded.

The procedures described above with reference to Figures 4 and 5 can also be implemented by base stations in a network in which not all base stations are capable of such operation. In that case, messages for base stations which cannot handle multicast operation must continue to be sent through the respective base station controllers. The BSC must therefore receive multicast messages sent from the paging gateway intended for such base stations.

The invention has been described above with reference to its use in a GSM network, which is used primarily for voice calls. However, it will be apparent that the invention is equally applicable to any mobile communications network. For example, the invention is applicable to a General Packet Radio System (GPRS) network, which transmits packet data signals. In such a network, a location area can be subdivided into routing areas.

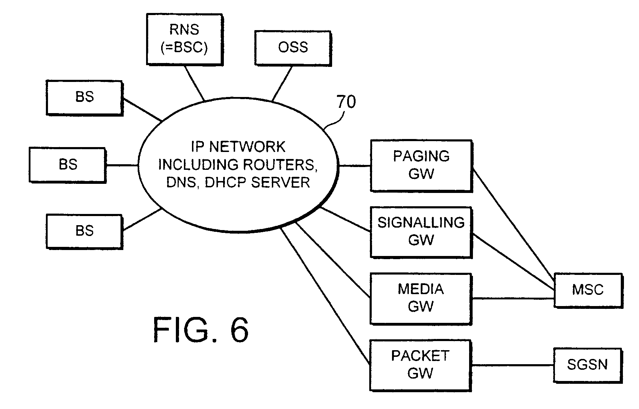

Figure 6 is a schematic representation of a partially packet-based network, operating using the Internet Protocol (IP). The illustrated network includes a large number of cells, which are not specifically shown in Figure 6. Each cell contains a respective base station BS, for communication with mobile stations within the cell. Of course, only a few of the base stations BS are shown in Figure 6. Each base station BS is connected to an Internet Protocol (IP) based communications network 70.

Each base station is under the control of a Radio Network Server RNS, which is equivalent to a base station controller (BSC). Also connected to the network is an Operation & Support System OSS.

A mobile services switching centre MSC is connected to the network 70, and controls the operation of the network through a signalling gateway and a media gateway. Packet data is transmitted through a packet gateway to a Serving GPRS Service Node (SGSN), as is known.

In accordance with the invention, the mobile services switching centre MSC is also connected to the network 70 through a paging gateway, in the same way as described above with reference to the network of Figure 1.

As before, although the paging gateway is shown as a separate entity, its functionality could be included in any other convenient network node.

Thus, the invention is applicable to any type of network, not only those illustrated.

It will be noted that the networks of the present invention allow the operation of the paging system to be tested easily. Specifically, a particular device can be dynamically assigned to one or more multicast groups, and can then monitor receipt of paging messages sent to that group.

There are therefore described networks, and methods of operation thereof, in which the efficiency of paging, compared to the required amount of network traffic, can be optimised.

## Claims

1. A method of issuing paging messages over an air interface in a cellular radio communication network comprising network nodes (4;8) being connected to a plurality of base stations (BS) forming a location area (10;12;14), each base station (BS) covering a cell (2) providing an air interface for radio communications to mobile stations, which can roam freely between the cells (2), the method comprising:
receiving in a network node (4;8) a paging request for a mobile station located in any of the cells (2), the paging request specifying one or more cells (2) in which a page must be issued;
generating a multicast paging message being addressed to the base stations (BS) in the cells (2) specified in the paging request;
transmitting the multicast paging message from the network node (4;8) to a plurality of base stations (BS) located in a predefined area;
determining in a base station located in the predefined area, but not being specifically addressed in the multicast paging message, if the paging message is addressed to one of its neighbouring cells (2) or to a cell (2) in a neighbouring location area (10;12;14); and
if yes, issuing a paging message over the air interface corresponding to the received multicast paging message, if a paging channel of said base station (BS) has capacity therefor.

2. A method as claimed in claim 1, wherein if a base station (BS) located in the predefined area determines that a received multicast paging message is specifically addressed thereto, the method comprises issuing a paging message over the air interface corresponding to the received multicast paging message.

3. A method as claimed in claim 1, comprising issuing a paging message over the air interface, corresponding to a received multicast paging message that is addressed to a neighbouring cell or a cell in a neighbouring location area (10;12;14) in preference to a received multicast paging message which is not so addressed.

4. A base station (BS) for use in a cellular radio communications network comprising network nodes (4;8) being connected to a plurality of base stations (BS) forming a location area (10;12;14), each base station (BS) covering a cell providing an air interface for radio communications to mobile stations which can roam freely between the cells (2), the base station (BS) comprising:
means for receiving a multicast paging message from a network node (4;8), the multicast paging message being addressed to one or more base stations (BS) in the network;
means for determining, if the multicast paging message is not specifically addressed thereto, whether the paging message is addressed to one of its neighbouring cells (2), or to a cell (2) in a neighbouring location area (10;12;14); and
if yes, being adapted to issue a paging message over the air interface corresponding to the received multicast paging message, if a paging channel of said base station (BS) has capacity therefor.

5. A base station (BS) as claimed in claim 4, wherein the base station (BS) comprises:
means for issuing a corresponding paging message over the air interface; if the received multicast paging message is specifically addressed thereto.

6. A base station (BS) as claimed in claim 4, further being adapted to issue a paging message over the air interface, corresponding to a received multicast paging message that is addressed to a neighbouring cell (2) or a cell (2) in a neighbouring location area (10;12;14) in which the base station (BS) is located, in preference to a received multicast paging message which is not so addressed.

## Patentansprüche

1. Verfahren zum Ausgeben von Funkruf-Nachrichten über eine Luft-Schnittstelle in einem zellularen Funk-Kommunikationsnetzwerk, welches Netzknoten (4; 8) aufweist, die mit einer Vielzahl von Basisstationen (BS) verbunden sind, welche einen Standortbereich (10; 12; 14) ausbilden, wobei jede Basisstation (BS) eine Zelle (2) abdeckt, die eine Luft-Schnittstelle für Funk-Kommunikationen zu Mobilstationen, welche zwischen den Zellen (2) frei herumwandern können, bereitstellt, wobei das Verfahren die folgenden Verfahrensschritte aufweist:
Empfangen einer Funkruf-Anforderung für eine in einer der Zellen (2) angeordnete Mobilstation in einem Netzknoten (4; 8), wobei die Funkruf-Anforderung eine oder mehrere Zellen (2) spezifiziert, in welcher ein Funkruf ausgegeben werden muss;
Erzeugen einer an die Basisstationen (BS) adressierten Multicast-Funkruf-Nachricht bzw. Punkt-zu-Mehrpunkt-Funkruf-Nachricht in den in der Funkruf-Anforderung spezifizierten Zellen (2);
Übertragen der Multicast-Funkruf-Nachricht von dem Netzknoten (4; 8) zu einer in einem vorher festgelegten Bereich angeordneten Vielzahl von Basisstationen (BS); Ermitteln in einer in dem vorher festgelegten Bereich angeordneten, jedoch nicht in der Multicast-Funkruf-Nachricht adressierten Basisstation, ob die Funk-Nachricht an eine ihrer Nachbarzellen (2) oder an eine Zelle (2) in einem Nachbar-Standortbereich (10; 12; 14) adressiert ist; und
falls dies so ist, Ausgeben einer Funkruf-Nachricht über die Luft-Schnittstelle, die der empfangenen Multicast-Funkruf-Nachricht entspricht, falls ein Funkruf-Kanal der Basisstation (BS) hierfür eine Kapazität bzw. ein Leistungsvermögen aufweist.

2. Verfahren nach Anspruch 1, bei dem das Verfahren den Verfahrensschritt des Ausgebens einer Funkruf-Nachricht über die Luft-Schnittstelle aufweist, welche der empfangenen Multicast-Funkruf-Nachricht entspricht, und zwar dann, wenn eine in dem vorher festgelegten Bereich angeordnete Basisstation (BS) ermittelt, dass eine empfangene Multicast-Funkruf-Nachricht speziell hierzu adressiert ist.

3. Verfahren nach Anspruch 1, das den Verfahrensschritt des Ausgebens einer Funkruf-Nachricht über die Luft-Schnittstelle aufweist, welche einer empfangenen Multicast-Funkruf-Nachricht entspricht, die an eine Nachbar-Zelle oder an eine Zelle in einem Nachbar-Standortbereich (10; 12; 14) adressiert ist, und zwar in Vorrang zu einer empfangenen Multicast-Funkruf-Nachricht, die nicht derart adressiert ist.

4. Basisstation (BS) zur Verwendung in einem zellularen Funk-Kommunikationsnetzwerk, welches Netzknoten (4; 8) aufweist, die mit einer Vielzahl von Basisstationen (BS) verbunden sind, welche einen Standortbereich (10; 12; 14) ausbilden, wobei jede Basisstation (BS) eine Zelle (2) abdeckt, die eine Luft-Schnittstelle für Funk-Kommunikationen zu Mobilstationen, welche zwischen den Zellen (2) frei herumwandern können, bereitstellt, wobei die Basisstation (BS) folgendes aufweist:
eine Einrichtung zum Empfangen einer Multicast-Funkruf-Nachricht bzw. Punkt-zu-Mehrpunkt-Funkruf-Nachricht von einem Netzknoten (4; 8), wobei die Multicast-Funkruf-Nachricht an eine oder mehrere Basisstationen (BS) in dem Netzwerk adressiert ist;
eine Einrichtung zum Ermitteln, ob die Funkruf-Nachricht an eine ihrer Nachbarzellen (2) oder an eine Zelle (2) in einem Nachbar-Standortbereich (10; 12; 14) adressiert ist, und zwar falls die Multicast-Funkruf-Nachricht nicht speziell hierzu adressiert ist; und
wobei, falls dies so ist, diese Einrichtung derart ausgelegt ist, um eine Funkruf-Nachricht über die Luft-Schnittstelle, die der empfangenen Multicast-Funkruf-Nachricht entspricht, auszugeben, falls ein Funkruf-Kanal der Basisstation (BS) hierfür eine Kapazität bzw. ein Leistungsvermögen aufweist.

5. Basisstation (BS) nach Anspruch 4, bei der die Basisstation (BS) folgendes aufweist:
eine Einrichtung zum Ausgeben einer entsprechenden Funkruf-Nachricht über die Luft-Schnittstelle, und zwar dann, wenn die empfangene Multicast-Funkruf-Nachricht speziell hierzu adressiert ist.

6. Basisstation (BS) nach Anspruch 4, die ferner derart ausgelegt ist, um eine Funkruf-Nachricht über die Funkschnittstelle auszugeben, welche einer empfangenen Multicast-Funkruf-Nachricht entspricht, die an eine Nachbar-Zelle (2) oder an eine Zelle in einem Nachbar-Standortbereich (10; 12; 14), in welchem die Basisstation (BS) angeordnet ist, adressiert ist, und zwar in Vorrang zu einer empfangenen Multicast-Funkruf-Nachricht, die nicht derart adressiert ist.

## Revendications

1. Procédé d'émission de messages de recherche de personnes, sur une interface radio, dans un réseau de radiocommunications cellulaires comprenant des noeuds de réseau (4 ; 8) connectés à une pluralité de stations de base (BS) formant une zone de localisation (10 ; 12 ; 14), chaque station de base (BS) couvrant une cellule (2) et fournissant une interface radio pour les radiocommunications vers des stations mobiles qui peuvent se déplacer librement entre les cellules (2), le procédé comprenant les étapes consistant à :
recevoir sur un noeud de réseau (4 ; 8) une demande de recherche de personne pour une station mobile située dans l'une quelconque des cellules (2), la demande de recherche de personne spécifiant une ou plusieurs cellules (2) dans lesquelles la recherche de personne doit être envoyée ;
produire un message multidestinataire de recherche de personne, adressé aux stations de base (BS) dans les cellules (2) spécifiées dans la demande de recherche de personne ;
émettre le message multidestinataire de recherche de personnes à partir du noeud de réseau (4 ; 8) vers une pluralité de stations de base (BS) situées dans une zone prédéterminée ;
déterminer, sur une station de base située dans la zone prédéterminée mais qui n'est pas spécifiquement destinataire du message multidestinataire de recherche de personne, si le message de recherche de personne est adressé à l'une des cellules (2) qui lui sont adjacentes ou à une cellule (2) d'une zone de localisation adjacente (10 ; 12 ; 14) ; et
si oui, émettre un message de recherche de personne sur l'interface radio correspondant au message multidestinataire de recherche de personne qui a été reçu, si un canal de recherche de personne de ladite station de base (BS) offre une capacité à cet effet.

2. Procédé selon la revendication 1, dans lequel, si une station de base (BS) située dans une zone prédéterminée détermine qu'un message multidestinataire de recherche de personne qui a été reçu lui est adressé, le procédé comprend l'étape consistant à émettre un message de recherche de personne sur l'interface radio correspondant au message multidestinataire de recherche de personne qui a été reçu.

3. Procédé selon la revendication 1, comprenant l'étape consistant à émettre, sur l'interface radio, un message de recherche de personne correspondant à un message multidestinataire de recherche de personne qui a été reçu et qui est adressé à une cellule adjacente ou à une cellule dans une zone de localisation adjacente (10 ; 12 ; 14) de préférence à un message multidestinataire de recherche de personne qui a été reçu et qui n'est pas adressé ainsi.

4. Station de base (BS) destinée à être utilisée dans un réseau de radiocommunications cellulaires comprenant des noeuds de réseau (4 ; 8) connectés à une pluralité de stations de base (BS) formant une zone de localisation (10 ; 12 ; 14), chaque station de base (BS) couvrant une cellule et fournissant une interface radio pour les radiocommunications vers des stations mobiles qui peuvent se déplacer librement entre les cellules (2), la station de base (BS) comprenant :
un moyen de recevoir un message multidestinataire de recherche de personne d'un noeud de réseau (4 ; 8), le message multidestinataire de recherche de personne étant adressé à une ou plusieurs stations de base (BS) du réseau ;
un moyen de déterminer, au cas où le message multidestinataire de recherche de personne n'est pas spécifiquement adressé à elle-même, si le message de recherche de personne est adressé à l'une des cellules (2) qui lui sont adjacentes, ou à une cellule (2) dans une zone de localisation adjacente (10 ;12 ; 14) ; et
si oui, la station de base étant adaptée pour émettre sur l'interface radio un message de recherche de personne correspondant au message multidestinataire de recherche de personne qui a été reçu, si un canal de recherche de personne de ladite station de base (BS) offre une capacité à cet effet.

5. Station de base (BS) selon la revendication 4, dans laquelle la station de base (BS) comprend :
un moyen pour émettre sur l'interface radio un message de recherche de personne correspondant si le message multidestinataire de recherche de personne qui a été reçu est spécifiquement adressé à elle-même.

6. Station de base (BS) selon la revendication 4, étant en outre adaptée pour émettre sur l'interface radio un message de recherche de personne, correspondant à un message multidestinataire de recherche de personne qui a été reçu et qui est adressé à une cellule (2) adjacente ou à une cellule (2) dans une zone de localisation adjacente (10 ; 12 ; 14) dans laquelle la station de base (BS) est située, de préférence à un message multidestinataire de recherche de personne qui a été reçu et qui n'est pas adressé ainsi.
